# EUROPEAN PATENT APPLICATION

(11) **EP 3 232 458 A1**
(43) Date of publication of application: **18.10.2017**
(21) Application number: 17165917.0
(22) Date of filing: 11.04.2017
(51) Int. Cl.: H01H 21/06, B60Q 1/42

(54) **INPUT OPERATING APPARATUS**

(30) Priority: 12.04.2016 JP 2016079288
(71) Applicant: Alps Electric Co., Ltd., Tokyo 145-8501 (JP)
(72) Inventor: KOSAKA, Ken, Ota-ku, Tokyo 145-8501 (JP); MIURA, Tomonori, Ota-ku, Tokyo 145-8501 (JP)
(74) Representative: Schmitt-Nilson Schraud Waibel Wohlfrom Patentanwälte Partnerschaft mbB

(57) **Abstract**

An anti-cancel jam mechanism (85) is provided in a cancel lever (4) instead of in a holding body (3). This can simplify the structure of the holding body and reduce the size of the structure of the holding body. Furthermore, the anti-cancel jam mechanism is provided in the cancel lever that is positioned near a housing (2) and outside the housing. Compared to the case where the anti-cancel jam mechanism is provided in the holding body, this can increase ease of assembly and reduce the production cost. A moving body (93) is fitted into an accommodating space (50b) by using a snap-in mechanism.

## Description

### BACKGROUND OF THE INVENTION

### 1. Field of the Invention

The present invention relates to input operating apparatuses that include an operating lever which is at least rotatable from a neutral position. In particular, the present invention relates to an input operating apparatus that has the function of, for example, automatically returning the operating lever from a left-turn indication rotational position or a right-turn indication rotational position to a neutral position when a steering wheel having been rotated in one direction is rotated in the opposite direction to the one direction.

### 2. Description of the Related Art

An input operating apparatus 1 as one of input operating apparatuses is provided in a driver's seat of an automobile. In the input operating apparatus 1, an operating lever is rotatably provided in a housing attached to a steering column. A switch driven by rotation of the operating lever is provided in the housing so as to allow a left-turn indicator lamp or a right-turn indicator lamp to flash by rotating the operating lever from a neutral position to a left-turn indication rotational position or a right-turn indication rotational position.

Although the operating lever is latched at the left-turn indication rotational position or the right-turn indication rotational position, the input operating apparatus includes a cancel mechanism that automatically returns the operating lever from the left-turn indication rotational position or the right-turn indication rotational position to the neutral position when the steering wheel having been rotated in an indicated direction is rotated in the opposite direction.

The input operating apparatus also includes an anti-cancel jam mechanism. The anti-cancel jam mechanism prevents damage due to an overload produced between a cancel cam member and a cancel lever when the steering wheel is rotated while the operating lever having been operated is held (locked) by a hand or the like (while the rotation of the holding body is regulated). Examples of such an input operating apparatus include an input operating apparatus described in, for example, Japanese Unexamined Patent Application Publication No. 2012-195103.

### SUMMARY OF THE INVENTION

In the above-described related-art input operating apparatus, an anti-cancel jam mechanism is provided in a holding body that is engaged with an operating lever. Since many components of the input operating apparatus is disposed in the holding body, there arises a problem in that disposition of the anti-cancel jam mechanism in the holding body makes the structure complex and makes the assembly difficult.

The present invention provides an input operating apparatus which includes an anti-cancel jam mechanism and ease of assembly of which is increased.

According to an aspect of the present invention, an input operating apparatus includes an operating lever, a holding body that holds a base of the operating lever such that the base is rotatable in one plane, a support body that supports the holding body such that the holding body is rotatable in another plane which intersects the one plane, and a cancel lever that is movable as the holding body is rotated, that is rotatable, and that is able to be advanced toward and retracted from a rotational path of a cancel projection which is rotated together with a steering shaft. The cancel lever includes an anti-cancel jam mechanism that is advanced toward and retracted from the rotational path of the cancel projection and that is engageable with the cancel projection, that is engaged with the holding body, and that is moved in a direction retracting from the rotational path of the cancel projection when receiving a rotational force from the cancel projection while the rotation of the holding body is regulated by the operating lever.

With this structure, the anti-cancel jam mechanism is provided in the cancel lever instead of in the holding body. This can simplify the structure of the holding body and reduce the size of the structure of the holding body. Furthermore, the anti-cancel jam mechanism is provided in the cancel lever that is positioned on an outer side. Compared to the case where the anti-cancel jam mechanism is provided in the holding body, this can increase ease of assembly and reduce the production cost.

Preferably, the cancel lever of the input operating apparatus includes a cancel lever main body and the anti-cancel jam mechanism. Preferably, the anti-cancel jam mechanism includes an elastic member and a moving body provided in the cancel lever main body with the elastic member interposed therebetween. Preferably, when the rotation of the holding body is regulated by the operating lever and the rotational force is applied from the cancel projection to the cancel lever, the moving body is moved in the direction retracting from the rotational path of the cancel projection against an elastic force of the elastic member.

With this structure, the anti-cancel jam mechanism is realized by holding the moving body in the cancel lever main body with the elastic member interposed therebetween. Accordingly, a unit for realizing the anti-cancel jam mechanism can be incorporated in the cancel lever in advance. This can increase ease of assembly and reduce the production cost.

Preferably, in a neutral state in which the cancel projection is positioned in a movement path of the moving body of the input operating apparatus, the moving body faces the cancel projection with a gap therebetween and is positioned out of the rotational path of the cancel projection. Preferably, in a non-neutral state in which the cancel projection is not positioned in the movement path of the moving body, the moving body is positioned in the rotational path of the cancel projection. Preferably, when the non-neutral state changes to the neutral state, the moving body is pressed by the cancel projection, thereby the moving body rotates the cancel lever, and the rotation of the cancel lever causes the holding body to be pressed so as to return the holding body to the neutral state.

With this structure, the holding body can be reliably returned to the neutral position by bringing the moving body of the cancel lever into engagement with the cancel projection.

Preferably, the cancel lever of the input operating apparatus includes a first engaging portion and a second engaging portion. The first engaging portion is provided outside the support body, advanced toward and retracted from the rotational path of the cancel projection, and engageable with the cancel projection. The second engaging portion is provided inside the support body and engaged with the holding body. Preferably, the anti-cancel jam mechanism is provided in the first engaging portion.

With this structure, the anti-cancel jam mechanism is provided in the first engaging portion that is positioned outside the support body. This can increase ease of assembly and reduce the production cost.

Preferably, the cancel lever of the input operating apparatus has an accommodating space in which the moving body is slidably held, and the moving body is fitted into the accommodating space by using a snap-in mechanism.

With this structure, the moving body is incorporated in the cancel lever by using the snap-in mechanism. This can increase ease of assembly and reduce the production cost.

Preferably, the operating lever of the input operating apparatus is rotatable from a neutral position to at least a left-turn indication rotational position and a right-turn indication rotational position. Preferably, the operating lever includes a first engaging portion and a second engaging portion. The first engaging portion projects toward the rotational path and is advanced toward and retracted from the rotational path. The second engaging portion projects in an opposite direction to a direction in which the first engaging portion projects and, during the retraction from the rotational path of the cancel projection, the second engaging portion is rotated so as to be brought into contact with the holding body, thereby rotating the holding body so as to cause the operating lever to be automatically returned from the left-turn indication rotational position or the right-turn indication rotational position to the neutral position.

With this structure, when the first engaging portion of the cancel lever is brought into engagement with the cancel projection, in conjunction with this engaging movement, the second engaging portion can reliably return the holding body to the neutral position.

According to the present invention, the input operating apparatus which includes the anti-cancel jam mechanism and ease of assembly of which is increased can be provided.

### BRIEF DESCRIPTION OF THE DRAWINGS

Fig. 1 is an external perspective view of a cancel cam member and an input operating apparatus according to an embodiment of the present invention;
Fig. 2 is an external perspective view of the input operating apparatus illustrated in Fig. 1 seen from the Z2 direction toward the Z1 direction;
Fig. 3 is an exploded perspective view of the input operating apparatus illustrated in Figs. 1 and 2;
Fig. 4 is an external perspective view of the input operating apparatus illustrated in Fig. 2 with components such as a base plate omitted;
Fig. 5 is an external perspective view of the input operating apparatus seen from the Z1 direction toward the Z2 direction illustrated in Fig. 1 with an upper casing omitted;
Fig. 6 is an external perspective view of the input operating apparatus seen from the Z2 direction toward the Z1 direction illustrated in Fig. 1 with the upper casing, a lower casing, and the base plate omitted;
Fig. 7 is an external side view of the input operating apparatus illustrated in Fig. 1 seen from the Y1 direction toward the Y2 direction illustrated in Fig. 1 with the upper casing and the lower casing omitted;
Fig. 8 is a plan view of a cancel lever illustrated in, for example, Fig. 3 seen from the Z1 direction toward the Z2 direction;
Fig. 9 is a side view of the cancel lever illustrated in, for example, Fig. 3 seen from the Y1 direction toward the Y2 direction;
Fig. 10 is a bottom view of the cancel lever illustrated in, for example, Fig. 3 seen from the Z2 direction toward the Z1 direction;
Fig. 11 illustrates a state in which an operating lever that is not locked is set at a right-turn indication position;
Fig. 12 illustrates a state in which a steering wheel is rotated clockwise following the state illustrated in Fig. 11;
Fig. 13 illustrates a process in which the steering wheel having been rotated clockwise for a right turn is returned by being rotated counterclockwise;
Fig. 14 illustrates a state in which the operating lever that is not locked is set at a left-turn indication position;
Fig. 15 illustrates a state in which the steering wheel is rotated counterclockwise following the state illustrated in Fig. 14;
Fig. 16 illustrates a process in which the steering wheel having been rotated counterclockwise for a left turn is returned by being rotated clockwise;
Fig. 17 illustrates an operation performed when the operating lever is locked with, for example, a finger at the start of operations in which the steering wheel having been rotated clockwise for a right turn is returned by being rotated counterclockwise as illustrated in Fig. 13; and
Fig. 18 illustrates an operation performed when the operating lever is locked with, for example, a finger at the start of operations in which the steering wheel having been rotated counterclockwise for a left turn is returned by being rotated clockwise as illustrated in Fig. 16.

### DESCRIPTION OF THE PREFERRED EMBODIMENTS

An embodiment of the present invention will be described.

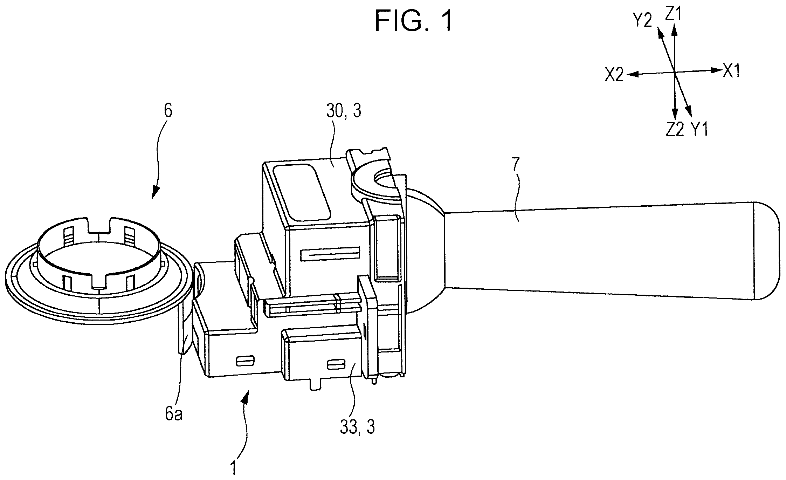

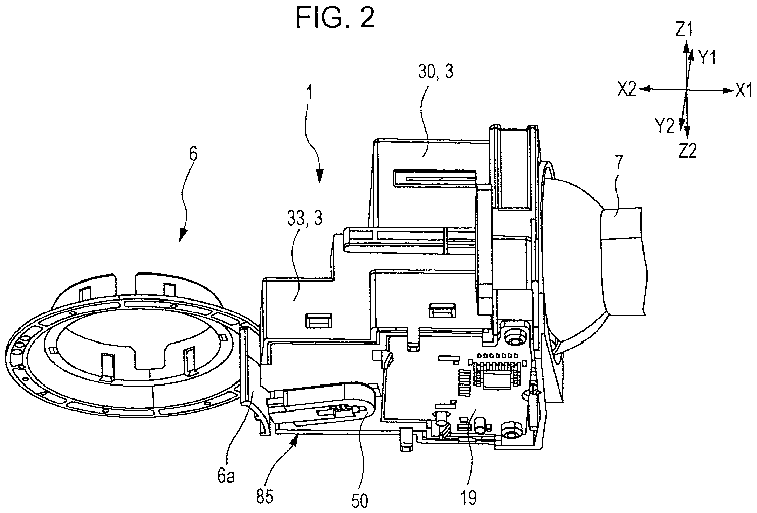

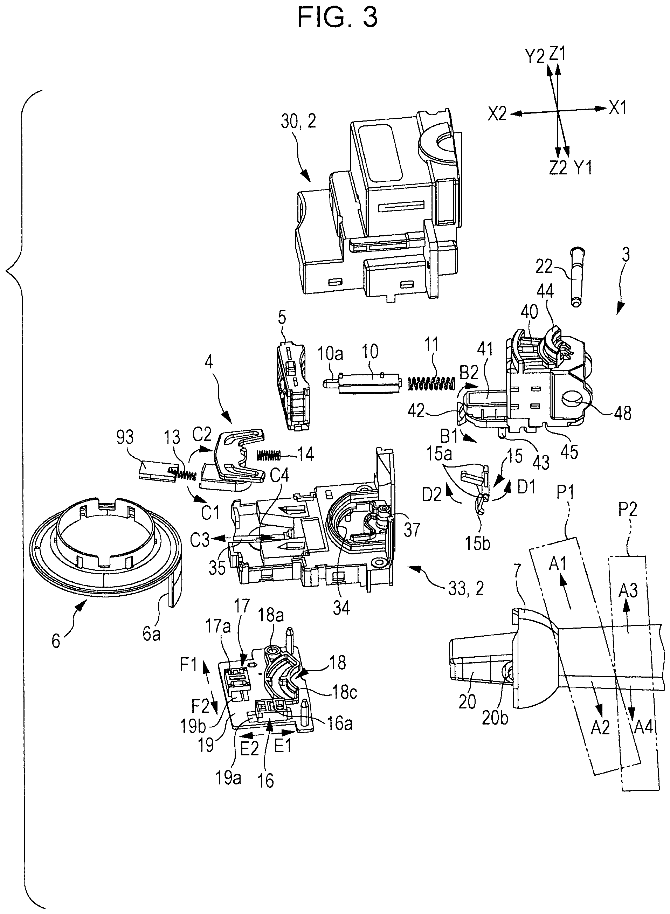

The embodiment of the present invention is described in detail with reference to the drawings. Fig. 1 is an external perspective view of a cancel cam member 6 and an input operating apparatus 1 according to the embodiment of the present invention. Fig. 2 is an external perspective view of the input operating apparatus 1 illustrated in Fig. 1 seen from the Z2 direction toward the Z1 direction. Fig. 3 is an exploded perspective view of the input operating apparatus 1 illustrated in Figs. 1 and 2.

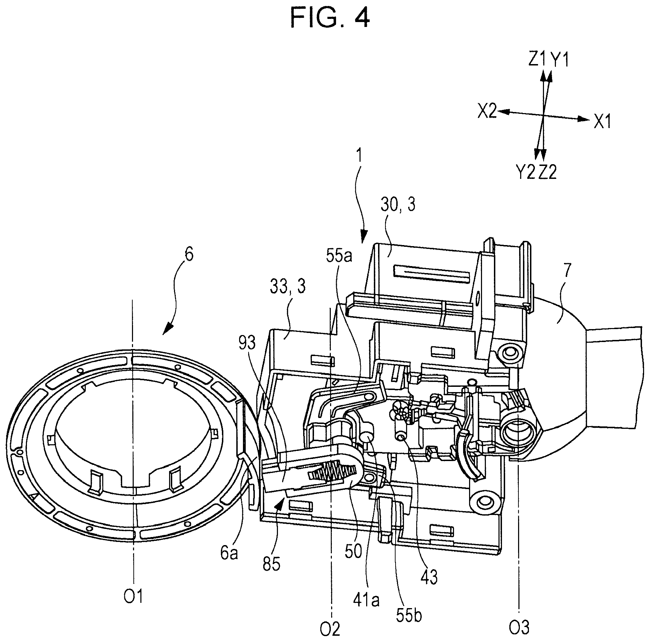

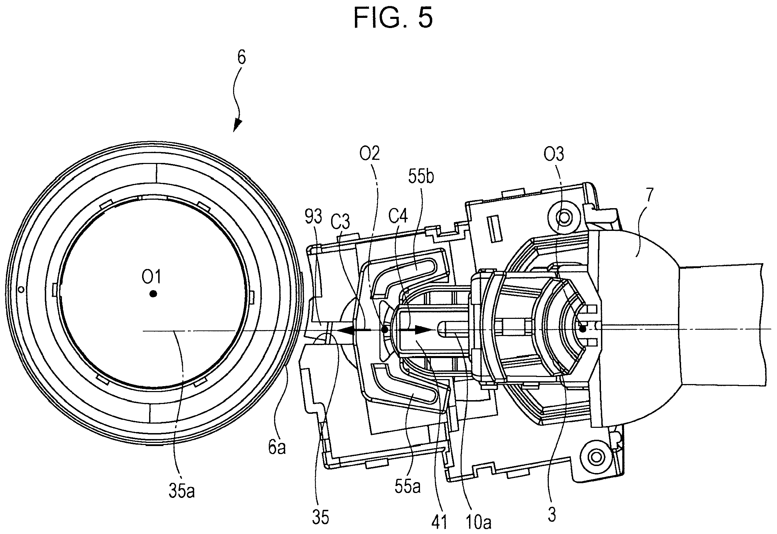

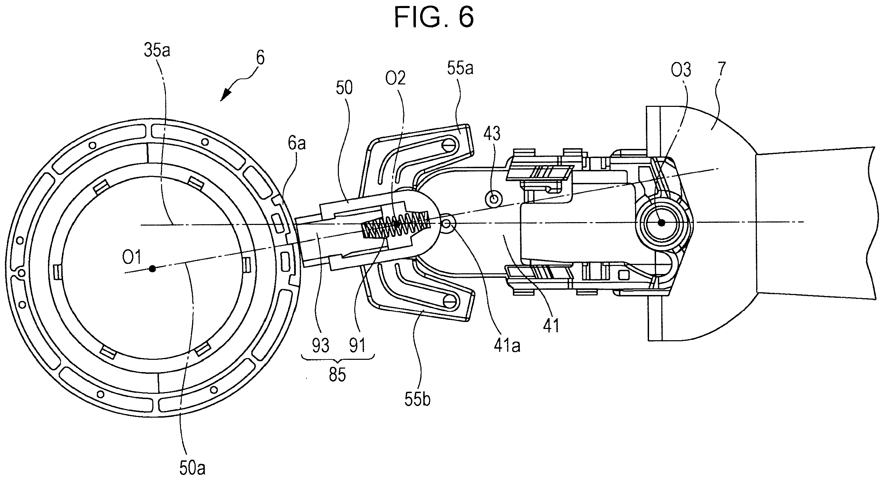

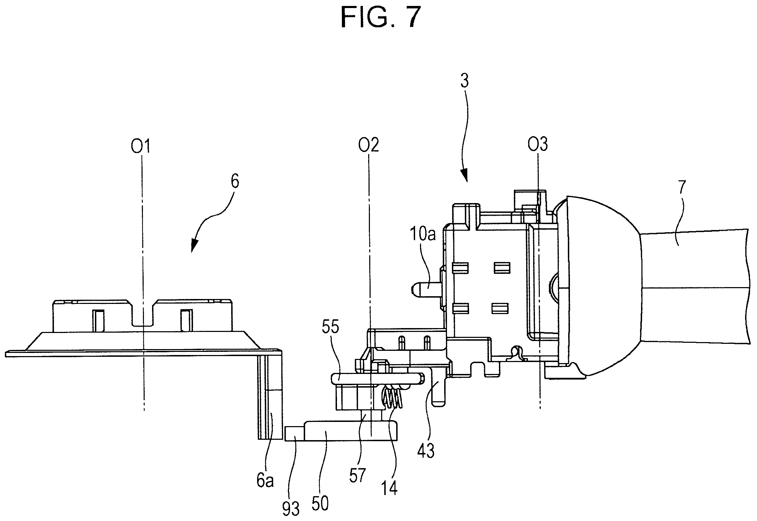

Fig. 4 is an external perspective view of the input operating apparatus 1 illustrated in Fig. 2 with components such as a base plate 19 omitted. Fig. 5 is an external perspective view of the input operating apparatus 1 seen from the Z1 direction toward the Z2 direction illustrated in Fig. 1 with an upper casing 30 omitted. Fig. 6 is an external perspective view of the input operating apparatus 1 seen from the Z2 direction toward the Z1 direction illustrated in Fig. 1 with the upper casing 30, a lower casing 33, and the base plate 19 omitted. Fig. 7 is an external side view of the input operating apparatus 1 illustrated in Fig. 1 seen from the Y1 direction toward the Y2 direction illustrated in Fig. 1 with the upper casing 30 and the lower casing 33 omitted.

As illustrated in Fig. 3, the input operating apparatus 1 includes an operating lever 7, a housing 2, a holding body 3, a cancel lever 4, and so forth.

The housing 2 includes the upper casing 30 and the lower casing (support body) 33. The housing 2 is mounted in a steering column of an automobile and supports the holding body 3 such that the holding body 3 is rotatable in another plane that intersects one plane.

The holding body 3 supports a base 20 of the operating lever 7 such that the base 20 is rotatable on the one plane.

The cancel lever 4 is provided in the housing 2 and movable as the holding body 3 is rotated. The cancel lever 4 is rotatable and can be advanced toward and retracted from a rotational path of a cancel projection 6a that is rotated about a first virtual rotational axis O1 together with a steering shaft.

The operating lever 7 outwardly projects from the housing 2 and exposed to the interior of the automobile.

As illustrated in, for example, Fig. 6, an anti-cancel jam mechanism 85 is provided in the cancel lever 4 instead of in the holding body 3 in the input operating apparatus 1. This can simplify the structure of the holding body 3 and reduce the size of the structure of the holding body 3. The anti-cancel jam mechanism 85 prevents damage due to an overload produced between the cancel cam member 6 and the cancel lever 4 when a steering wheel is rotated while the operating lever 7 having been operated is locked by a hand or the like. Furthermore, the above-described anti-cancel jam mechanism 85 is provided in the cancel lever 4 that is positioned near the housing 2 and outside the housing 2. Compared to the case where the anti-cancel jam mechanism 85 is provided in the holding body 3, this can increase ease of assembly and reduce the production cost.

The operating lever 7 can be operated to rotate in four directions, that is, the A1 to A4 directions illustrated in Fig. 3. The A1 and A2 directions are in the one plane, that is, in a single plane parallel to a plane P1. The A3 and A4 directions are in the other plane intersecting the plane P1, that is, in a single plane parallel to a plane P2. When the operating lever 7 is rotated in the A1 or A2 direction, the operating lever 7 is latched at a left-turn indication position or a right-turn indication position, and a left-turn indication or a right turn indication is output from the input operating apparatus 1.

The input operating apparatus 1 is mounted in the steering column of the automobile. The steering shaft (not illustrated) is disposed on the opposite side to a side toward which the operating lever 7 projects. As the operating lever 7 is operated and a steering operation is performed, the cancel lever 4 included in the input operating apparatus 1 is moved in accordance with a movement of the cancel cam member 6 that is moved together with the steering shaft.

Regarding rotating operations of the operating lever 7 in the A3 direction and the A4 direction, desired functions can be assigned in accordance with operating directions. For example, the rotating operations can be set as follows: the rotating operation in the A4 direction can be latched, and the function of switching a head light to a high beam is assigned to the rotating operation in the A4 direction; and the rotating operation in the A3 direction is automatically returned without being latched, and the function of turning on the head light only when the operating lever 7 is operated is assigned to the rotating operation in the A3 direction.

As illustrated in Fig. 3, the operating lever 7 includes the base 20 and an operating portion (not illustrated). The base 20 is a base side of the operating lever 7 and housed in the housing 2. The operating portion is exposed to the cabin and to be operated by the driver.

The housing 2 is formed by integrating the upper casing 30 and the lower casing 33 with each other with a space formed therein. Components such as the base 20 of the operating lever 7 are housed in the space in the housing 2. Main components housed in the housing 2 include the holding body 3, the cancel lever 4, a cam member 5, a drive body 10, and a swing lever 15.

The holding body 3 includes a box-shaped main body 40. The main body 40 allows the base 20 of the operating lever 7 to be inserted thereinto and to be exposed on the cam member 5 side. The main body 40 includes a projecting surface portion 41 that projects toward the steering shaft side and a guide projection 44 that projects from an upper surface of the main body 40.

The guide projection 44 is rotatably supported by the housing 2. Here, since the holding body 3 is rotatably supported by the housing 2 about the guide projection 44, the projecting surface portion 41 of the holding body 3 is rotated in a B1 direction or a B2 direction when the operating lever 7 is operated to rotate in the A1 direction or A2 direction. The base 20 is rotatably supported by the holding body 3 about a shaft 22 inserted through a shaft insertion portion 20b formed in the base 20 and a shaft insertion portion 48 formed in the holding body 3. Thus, when the operating lever 7 is operated so as to rotate in the A3 direction or A4 direction, only the operating lever 7 is rotated without rotating the holding body 3.

An engaging surface 42 is formed on a lower surface side at an end portion of the projecting surface portion 41 of the holding body 3. The engaging surface 42 is engaged with and disengaged from an engaging projection 53 provided on the cancel lever 4. The details of the engaging surface 42 and the engaging projection 53 will be described later.

Furthermore, as illustrated in Fig. 6, a drive portion 41a is provided on a lower surface (surface on the Z2 side) of the projecting surface portion 41. The drive portion 41a is brought into engagement with the cancel lever 4 when a cancel operation is performed.

As illustrated in Fig. 3, the drive body 10 is slidably attached to an accommodating recess (not illustrated) of the base 20 of the operating lever 7 with a first elastic member 11 interposed between the drive body 10 and the accommodating recess. The drive body 10 is elastically urged so that a tip end portion 10a is pressed against the cam member 5 that faces the base 20.

The tip end portion 10a of the drive body 10 is guided by the cam member 5 and slides in four directions as the operating lever 7 is operated to rotate. That is, a crisscross cam groove (not illustrated) corresponding to the operating directions of the operating lever 7 is formed in a cam surface portion (not illustrated) of the cam member 5 facing the base 20.

The cam groove is recessed most at a central portion thereof corresponding to a neutral position of the operating lever 7. The cam groove is defined by inclined surfaces formed from the central portion toward peripheral directions. The drive body 10 is elastically pressed against the cam groove. Thus, when the tip end portion 10a exists on one of the inclined surfaces as a result of rotating operation of the operating lever 7 in one of the four directions, the operating lever 7 is elastically urged in a direction in which the operating lever 7 is automatically returned to the neutral position due to the elastically urging force of the first elastic member 11.

Furthermore, the engaging projection 53 stands erect at an intermediate position between a first arm 55a and a second arm 55b on an upper surface of the cancel lever 4. As illustrated in Fig. 3, the cancel lever 4 is attached to the lower casing 33 with a cancel elastic member 14 interposed therebetween.

As illustrated in Figs. 3 and 5, an elongated guide hole 35 is formed in the lower casing 33 of the housing 2. The elongated guide hole 35 guides a connecting portion 57 of the cancel lever 4 illustrated in Fig. 7 such that the connecting portion 57 can be advanced toward and retracted from the steering shaft side, that is, the rotational path of the cancel projection 6a side. Thus, the connecting portion 57 of the cancel lever 4 is guided by the elongated guide hole 35 such that the connecting portion 57 can be advanced and retracted in a C3 direction and a C4 direction, and the cancel lever 4 is rotatable in a C1 direction or a C2 direction illustrated in Fig. 3 about the connecting portion 57 at a desired position in the elongated guide hole 35.

The cancel lever 4 is constantly elastically urged toward the steering shaft by the cancel elastic member 14 attached to the housing 2. The cancel elastic member 14 includes, for example, a coil spring.

As illustrated in Fig. 3, the lower casing 33 of the housing 2 has an opening 34 and a guide projection 37. The opening 34 allows a connecting portion 15b extending downward from the swing lever 15 to be inserted therethrough. The guide projection 37 supports the holding body 3 in the rotating direction. A support shaft 15a of the swing lever 15 is swingably supported by a bearing 45 of the holding body 3. Thus, when the operating lever 7 is operated so as to be rotated in the A3 direction or the A4 direction illustrated in Fig. 3, the swing lever 15 swings in a D1 direction or a D2 direction illustrated in Fig. 3.

As illustrated in Fig. 3, the connecting portion 15b is engaged with a swing member 18 so as to swing the swing member 18. The swing member 18 is disposed on the lower side of the opening 34 of the lower casing 33. A rotational center 18a of the swing member 18 is swingably supported by the lower casing 33, and an arc-shaped engaging portion 18c of the swing member 18 is engaged with the connecting portion 15b. A projection (not illustrated) of the engaging portion 18c formed at an end portion on the opposite side to the rotational center 18a is inserted into an elongated hole 16a formed in a first slider 16. Thus, the first slider 16 can slide in an E1 and E2 directions illustrated in Fig. 3 by the swing member 18 that rotates as the swing lever 15 swings.

As illustrated in Fig. 3, a first contact 19a and a second contact 19b are disposed on the base plate 19. The first slider 16 includes a contact (not illustrated) to be in contact with the first contact 19a. As the swing lever 15 swings in the D1 direction or the D2 direction, the first slider 16 slides in the E1 direction or the E2 direction. This sliding of the first slider 16 allows a contact state of the contact of the first slider 16 with the first contact 19a to be switched.

As illustrated in Fig. 3, a second slider 17 is provided on the base plate 19. The second slider 17 slides as the holding body 3 rotates. As illustrated in Figs. 6 and 7, a connecting pin 43 formed on a lower surface of the holding body 3 is inserted through an elongated hole 17a formed in the second slider 17. Thus, when the holding body 3 rotates in the B1 direction or the B2 direction, the second slider 17 slides in an F1 direction or an F2 direction illustrated in Fig. 3.

The second slider 17 includes a contact (not illustrated) to be in contact with the second contact 19b. Sliding of the second slider 17 in the F1 direction or the F2 direction allows a contact state of the contact of the second slider 17 with the second contact 19b to be switched.

As illustrated in Fig. 3, the drive body 10 is supported on the steering shaft side (left side in Fig. 3) of the base 20 of the operating lever 7 with the first elastic member 11 interposed between the drive body 10 and the base 20. As illustrated in Fig. 3, an end portion of the base 20 of the operating lever 7 and the tip end portion 10a of the drive body 10 project from the holding body 3 toward the cam member 5. Furthermore, the tip end portion 10a of the drive body 10 is in contact with a cam surface (not illustrated) of the cam member 5.

The tip end portion 10a of the drive body 10 is in contact with a position on the cam surface of the cam member 5 in accordance with the orientation of the operating lever 7. For example, operating input of turning on/off of the high beam of the head light, left-turn indication, or right-turn indication is performed depending on this position on the cam surface.

The cancel lever 4 is held by the lower casing 33 of the housing 2 with the cancel elastic member 14 interposed therebetween. Such a structure allows the cancel lever 4 to be easily reliably rotated and to be easily reliably advanced toward and retracted from the rotational path of the cancel projection 6a with a simpler structure. Accordingly, the reliability of the input operating apparatus 1 can be improved, and the size of the input operating apparatus 1 can be further reduced.

When the operating lever 7 is at the neutral position, the engaging projection 53 formed on the upper surface of the cancel lever 4 and the engaging surface 42 of the holding body 3 are engaged with each other. The vertex of the engaging projection 53 and the vertex of the engaging surface 42 are in contact with each other, and the cancel lever 4 is retracted out of the rotational path of the cancel projection 6a with the cancel elastic member 14 further compressed. Accordingly, the cancel lever 4 is elastically urged toward the rotational path of the cancel projection 6a with a larger force.

### The Cancel Lever 4

The cancel lever 4 is described in detail below.

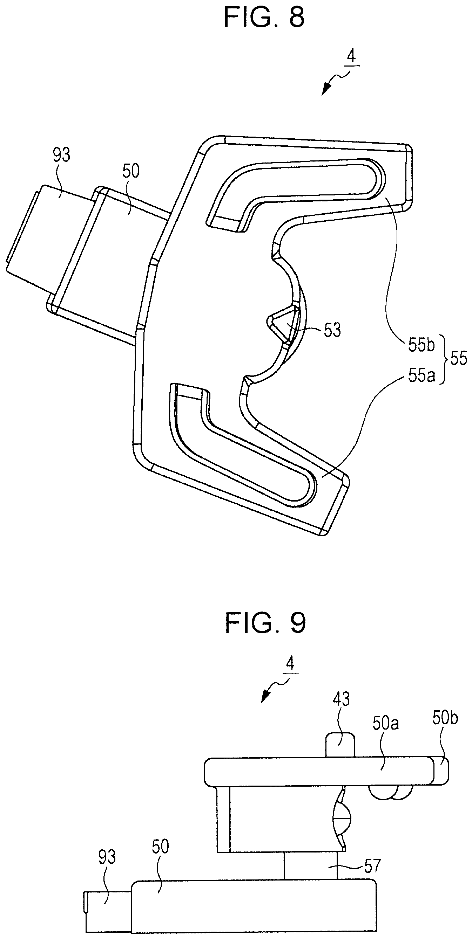

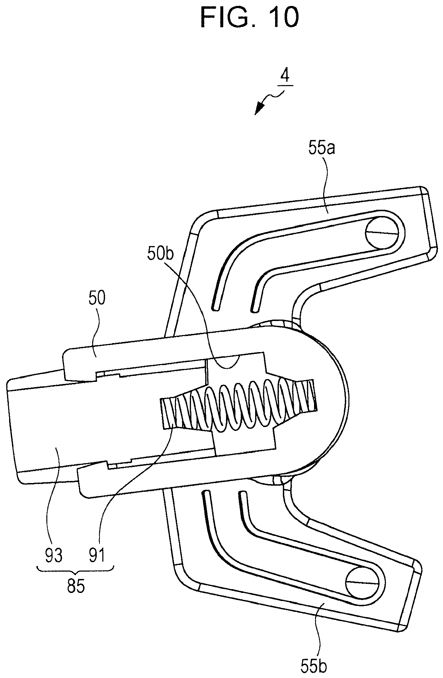

Fig. 8 is a plan view of the cancel lever 4 illustrated in, for example, Fig. 3 seen from the Z1 direction toward the Z2 direction. Fig. 9 is a side view of the cancel lever 4 illustrated in, for example, Fig. 3 seen from the Y1 direction toward the Y2 direction. Fig. 10 is a bottom view of the cancel lever 4 illustrated in, for example, Fig. 3 seen from the Z2 direction toward the Z1 direction.

The cancel lever 4 is rotatably attached to the lower casing 33 about a second virtual rotational axis 02 illustrated in, for example, Figs. 6 and 7, which is a rotational center of the connecting portion 57. Preferably, the cancel lever 4 is rotatable from the neutral position to at least a left-turn indication rotational position and a right-turn indication rotational position.

Preferably, as illustrated in Fig. 8, the cancel lever 4 includes a first engaging portion 50, a second engaging portion 55, and the connecting portion 57. The first engaging portion 50, the second engaging portion 55, and the connecting portion 57 are included in a cancel lever main body.

As illustrated in Fig. 3, the cancel lever 4 is attached to the lower casing 33 with the cancel elastic member 14 interposed therebetween and constantly urged toward the cancel cam member 6.

Preferably, the first engaging portion 50 projects toward the rotational path of the cancel projection 6a and is advanced toward and retracted from the rotational path of the cancel projection 6a. The first engaging portion 50 is engageable with the cancel projection 6a.

The second engaging portion 55 includes the first arm 55a and the second arm 55b that project toward the operating lever 7 side so as to be engaged with the holding body 3.

The connecting portion 57 extends in the second virtual rotational axis 02 direction and connects the first engaging portion 50 and the second engaging portion 55 to each other. That is, the first engaging portion 50 and the second engaging portion 55 are provided at different positions in the second virtual rotational axis 02 direction, and a region where the first engaging portion 50 and the second engaging portion 55 are superposed on each other extends in the perpendicular direction to the second virtual rotational axis 02 direction. Thus, even when the distance between the cancel cam member 6 and the cancel lever 4 is reduced, the distance required for advancing and retracting the cancel lever 4 can be sufficiently ensured, and size reduction can be achieved. This allows the distance between the cancel cam member 6 and the operating lever 7 to be reduced.

The cancel lever 4 is rotated about the second virtual rotational axis 02 when the cancel operation is performed. During the rotation of the cancel lever 4, the cancel lever 4 is brought into engagement (contact) with the drive portion 41a on the lower surface of the projecting surface portion 41 of the holding body 3, thereby rotating the holding body 3 so as to automatically return the operating lever 7 from the left-turn indication rotational position or the right-turn indication rotational position to the neutral position.

Furthermore, the second engaging portion 55 is closer to the holding body 3 than the first engaging portion 50 in the cancel lever 4. Thus, the second engaging portion 55 can be disposed close to the holding body 3. This allows an engagement structure of the second engaging portion 55 and the holding body 3 to be realized with a simple and small-sized structure.

As illustrated in Figs. 3 and 5, the connecting portion 57 is guided by the elongated guide hole 35 formed in the lower casing 33 so as to be advanced toward and retracted from the rotational path of the cancel projection 6a of the cancel cam member 6. At this time, the connecting portion 57 is guided by the elongated guide hole 35 so as to allow the cancel lever 4 to be rotated about the connecting portion 57.

With this structure that includes the elongated guide hole 35 formed in the lower casing 33, a separate guide portion is not required. Thus, size reduction can be achieved.

Furthermore, as illustrated in Fig. 2, the first engaging portion 50 is positioned outside the lower casing 33. In contrast, the second engaging portion 55 is disposed in the housing 2.

As described above, the elongated guide hole 35 that guides the connecting portion 57 is provided in the lower casing 33. Thus, the first engaging portion 50 can be provided outside the lower casing 33 with a simple structure. Furthermore, since the first engaging portion 50 is provided outside the lower casing 33, the size of the housing 2 can be reduced.

As illustrated in Fig. 5, the first virtual rotational axis O1 exists at a position separated from the position of a first virtual line 35a which passes through a path through which the cancel lever 4 is advanced and retracted (in the longitudinal direction of the elongated guide hole 35).

Thus, even when the distance between the cancel cam member 6 and the cancel lever 4 is reduced, the distance required for advancing and retracting the cancel lever 4 can be sufficiently ensured, and size reduction can be achieved. This allows the distance between the cancel cam member 6 and the operating lever 7 to be reduced.

Furthermore, as illustrated in Fig. 6, the first engaging portion 50 of the cancel lever 4 is line symmetric about a second virtual line 50a which passes through the first virtual rotational axis O1 of the cancel cam member 6 and the second virtual rotational axis 02 of the cancel lever 4.

Accordingly, when the cancel operation is performed, the first engaging portion 50 can be brought into contact with the cancel projection 6a in the same manner in both clockwise and counterclockwise rotations. Thus, the cancel operation can be reliably performed in both the clockwise and counterclockwise rotations.

Furthermore, as illustrated in Fig. 5, a third virtual rotational axis 03 of the holding body 3 is positioned on the first virtual line 35a which is an axis of the elongated guide hole 35. The axis of the elongated guide hole 35 is the path through which the cancel lever 4 is advanced and retracted.

Furthermore, at the neutral position illustrated in Fig. 6, the drive portion 41a of the projecting surface portion 41 of the holding body 3, which is brought into contact with the first arm 55a and the second arm 55b of the second engaging portion 55 of the cancel lever 4 when the cancel operation is performed, is positioned on the second virtual line 50a. The second virtual line 50a is a path through which the first engaging portion 50 is advanced and retracted.

Accordingly, when the cancel operation is performed, the cancel lever 4 can drive the operating lever 7 through the holding body 3 in the same state in both the clockwise and counterclockwise rotations. Thus, the clockwise and counterclockwise cancel operations can be reliably performed.

As illustrated in Fig. 5, the third virtual rotational axis 03 of the holding body 3 is positioned on the first virtual line 35a extending in the longitudinal direction of the elongated guide hole 35 (moving direction of the cancel lever 4).

Accordingly, the second engaging portion 55 of the cancel lever 4 can reliably return the holding body 3 (operating lever 7) to the neutral position in the same state in both the clockwise and counterclockwise cancel operations.

Preferably, as illustrated in Figs. 6 and 7, the first engaging portion 50 faces the cancel projection 6a with a gap therebetween and is positioned out of the rotational path of the cancel projection 6a in a neutral state in which the cancel projection 6a is positioned in the movement path of the first engaging portion 50.

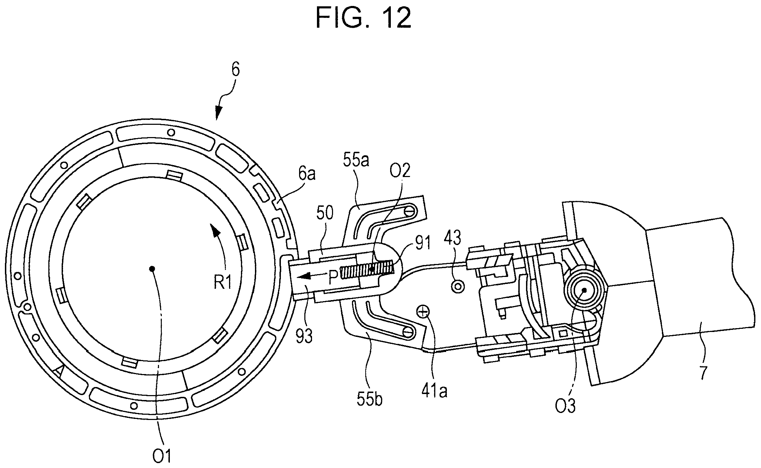

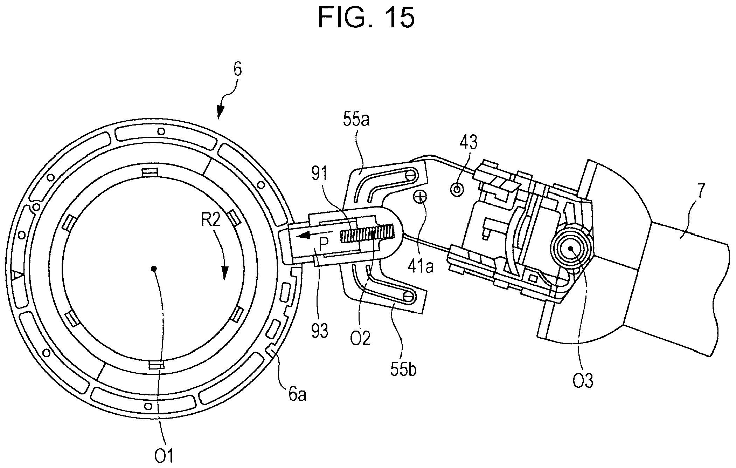

In contrast, as illustrated in, for example, Figs. 12 and 15, which will be described later, the first engaging portion 50 is positioned in the rotational path of the cancel projection 6a in a non-neutral state in which the cancel projection 6a is not positioned in the movement path of the first engaging portion 50.

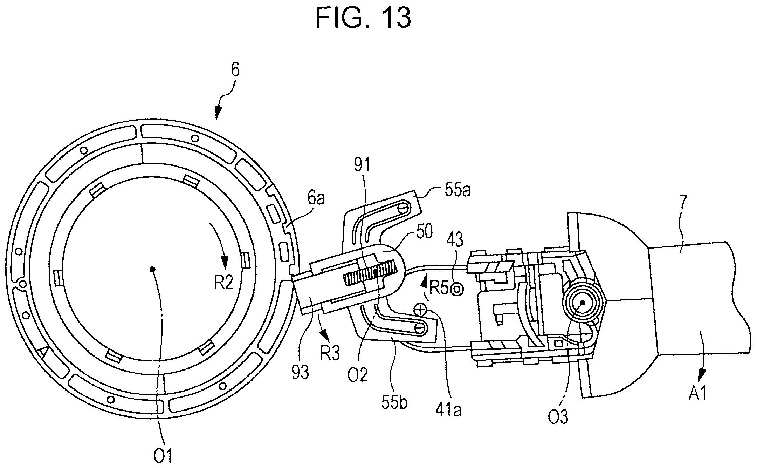

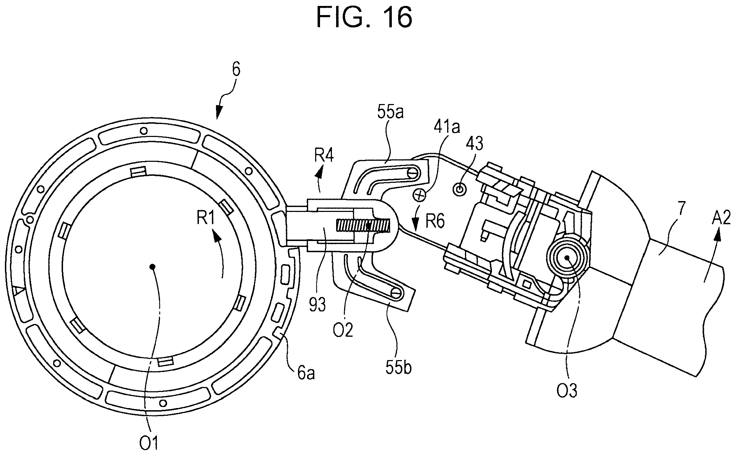

Preferably, as illustrated in, for example, Figs. 13 and 16, which will be described later, when the state changes from the non-neutral state from the neutral state, the first engaging portion 50 is pressed by the cancel projection 6a, so that the cancel lever 4 is rotated. This rotation of the cancel lever 4 causes the second engaging portion 55 to press the holding body 3, thereby returning the holding body 3 (operating lever 7) to the neutral position.

With this structure, when the first engaging portion 50 of the cancel lever 4 is brought into engagement with the cancel projection 6a, in conjunction with this engaging movement, the second engaging portion 55 can reliably return the holding body 3 to the neutral position.

### The Anti-Cancel Jam Mechanism

The anti-cancel jam mechanism is described. The anti-cancel jam mechanism prevents damage due to an overload produced between the cancel cam member 6 and the cancel lever 4 when the steering wheel is rotated while the operating lever 7 having been operated is held (locked) by a hand or the like (while the rotation of the holding body 3 is regulated).

Preferably, as illustrated in, for example, Fig. 6, the anti-cancel jam mechanism 85 is provided in the first engaging portion 50 of the cancel lever 4.

The anti-cancel jam mechanism 85 moves the cancel lever 4 in a direction in which the cancel lever 4 is retracted from the rotational path of the cancel projection 6a when the cancel cam member 6 is rotated, and the cancel lever 4 receives a rotational force from the cancel projection 6a while the rotation of the holding body 3 is regulated by the operating lever 7.

According to the present embodiment, the anti-cancel jam mechanism 85 is provided in the cancel lever 4 instead of in the holding body 3. This can simplify the structure of the holding body 3 and reduce the size of the structure of the holding body 3. Furthermore, the above-described anti-cancel jam mechanism 85 is provided in the cancel lever 4 that is positioned near the housing 2 and outside the housing 2. Compared to the case where the anti-cancel jam mechanism 85 is provided in the holding body 3, this can increase ease of assembly and reduce the production cost.

As illustrated in, for example, Figs. 4, 6, and 10, the anti-cancel jam mechanism 85 is provided in the first engaging portion 50. Preferably, the anti-cancel jam mechanism 85 includes, for example, an elastic member 91 and a moving body 93.

Preferably, in the anti-cancel jam mechanism 85, the moving body 93 (engaging portion with the cancel projection) is slidably accommodated in an accommodating space 50b formed in a surface of the first engaging portion 50 on the Z2 side illustrated in Fig. 3 with an end of the moving body 93 projecting toward the cancel cam member 6.

The moving body 93 of the anti-cancel jam mechanism 85 is incorporated in the first engaging portion 50 (cancel lever main body) with the elastic member 91 interposed therebetween.

Preferably, after a left turn or a right turn has been performed, when the steering wheel is returned to a state which the steering wheel had been in before the left turn or the right turn has been performed and the cancel projection 6a is brought into contact with the first engaging portion 50 positioned in the rotational path of the cancel projection 6a, the rotational force is applied to the first engaging portion 50. When this occurs while the rotation of the holding body 3 is regulated by locking the operating lever 7 with a finger or the like, the moving body 93 is moved in the direction retracting from the rotational path of the cancel projection 6a against an elastic force of the elastic member 91.

As described above, the anti-cancel jam mechanism 85 is realized by holding the moving body 93 in the first engaging portion 50 with the elastic member 91 interposed therebetween. Accordingly, a unit for realizing the anti-cancel jam mechanism 85 can be incorporated in the cancel lever 4 in advance. This can increase ease of assembly and reduce the production cost.

Preferably, the moving body 93 is fitted into the accommodating space 50b by using a snap-in mechanism. This can increase ease of assembly and reduce the production cost.

Examples of operations of the input operating apparatus 1 are described below.

Fig. 6 and Figs. 11 to 18 illustrate the positional relationships between the cancel cam member 6, the cancel lever 4, the holding body 3, and the operating lever 7 when the input operating apparatus 1 is seen from the Z2 side illustrated in Fig. 3. It should be noted that, since the input operating apparatus 1 is seen from the Z2 side, that is, from the opposite side in each of these drawings, the directions of arrows in these drawings are opposite to those in description in terms of the clockwise and counterclockwise directions.

As has been described, the operating lever 7 is at the neutral position in Fig. 6.

### Normal Operations (For A Right Turn)

Operations of the input operating apparatus 1 for a right turn with the operating lever 7 not locked are described below.

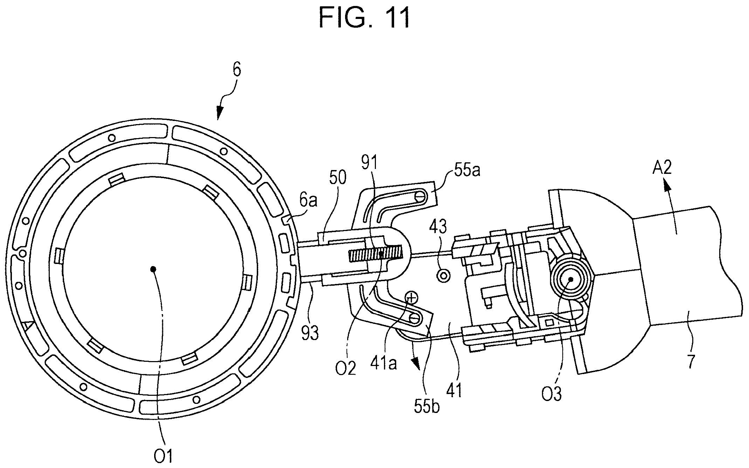

Fig. 11 illustrates a state in which the operating lever 7 is set at a right-turn indication position. Fig. 12 illustrates a state in which the steering wheel is rotated clockwise following the state illustrated in Fig. 11. Fig. 13 illustrates a process in which the steering wheel having been rotated clockwise for a right turn is returned by being rotated counterclockwise.

As illustrated in Fig. 11, for a right turn, the operator rotates the operating lever 7 in an arrow A2 direction with, for example, his or her finger. This rotation of the operating lever 7 causes the drive portion 41a of the holding body 3 to approach the second arm 55b of the cancel lever 4. In the state illustrated in Fig. 11, the moving body 93 of the first engaging portion 50 of the cancel lever 4 is in contact with the cancel projection 6a of the cancel cam member 6 and positioned out of the rotational path of the cancel projection 6a.

Next, as illustrated in Fig. 12, when the steering wheel is rotated clockwise, the cancel cam member 6 is rotated in an arrow R1 direction illustrated in Fig. 12. As a result, the cancel projection 6a is moved out of the path through which the cancel lever 4 is advanced and retracted, the cancel lever 4 is moved in an arrow P direction along the elongated guide hole 35 toward the cancel cam member 6 due to an urging force of the cancel elastic member 14 illustrated in Fig. 3, and the moving body 93 is positioned in the rotational path of the cancel projection 6a.

Next, as illustrated in Fig. 13, when the steering wheel having been rotated clockwise for the right turn is returned by being rotated counterclockwise, the cancel cam member 6 is rotated in an arrow R2 direction illustrated in Fig. 13. In this process, an end portion of the cancel projection 6a presses a side surface of the moving body 93 in the arrow R2 direction, thereby rotating the cancel lever 4 in an arrow R3 direction illustrated in Fig. 13 about the second virtual rotational axis 02. As a result, the second arm 55b presses the drive portion 41a in an arrow R5 direction, thereby rotating the operating lever 7 in an arrow A1 direction illustrated in Fig. 13 about the virtual rotational axis 03 so as to return the operating lever 7 to the neutral position illustrated in Fig. 6.

### Normal Operations (For A Left Turn)

Operations of the input operating apparatus 1 for a left turn with the operating lever 7 not locked are described below.

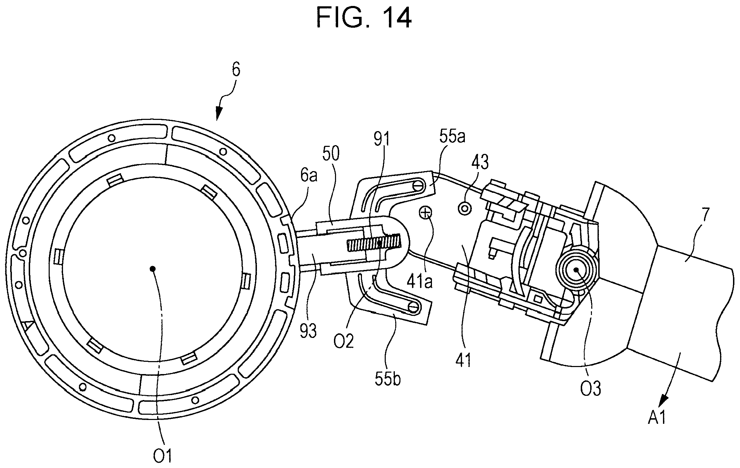

Fig. 14 illustrates a state in which the operating lever 7 is set at a left-turn indication position. Fig. 15 illustrates a state in which the steering wheel is rotated counterclockwise following the state illustrated in Fig. 14. Fig. 16 illustrates a process in which the steering wheel having been rotated counterclockwise for a left turn is returned by being rotated clockwise.

As illustrated in Fig. 14, for a left turn, the operator rotates the operating lever 7 in the arrow A1 direction with, for example, his or her finger. This rotation of the operating lever 7 causes the drive portion 41a of the holding body 3 to approach the first arm 55a of the cancel lever 4. In the state illustrated in Fig. 14, the moving body 93 of the first engaging portion 50 of the cancel lever 4 is in contact with the cancel projection 6a of the cancel cam member 6 and positioned out of the rotational path of the cancel projection 6a.

Next, as illustrated in Fig. 15, when the steering wheel is rotated counterclockwise, the cancel cam member 6 is rotated in the arrow R2 direction illustrated in Fig. 15. As a result, the cancel projection 6a is moved out of the path through which the cancel lever 4 is advanced and retracted, the cancel lever 4 is moved in the arrow P direction along the elongated guide hole 35 toward the cancel cam member 6 due to an urging force of the cancel elastic member 14 illustrated in Fig. 3, and the moving body 93 is positioned in the rotational path of the cancel projection 6a.

Next, as illustrated in Fig. 16, when the steering wheel having been rotated counterclockwise for the left turn is returned by being rotated clockwise, the cancel cam member 6 is rotated in the arrow R1 direction illustrated in Fig. 16. In this process, an end portion of the cancel projection 6a presses a side surface of the moving body 93 in the arrow R1 direction, thereby rotating the cancel lever 4 in an arrow R4 direction illustrated in Fig. 16 about the second virtual rotational axis 02. As a result, the first arm 55a presses the drive portion 41a in an arrow R6 direction, thereby rotating the operating lever 7 in the arrow A2 direction illustrated in Fig. 16 about the virtual rotational axis 03 so as to return the operating lever 7 to the neutral position illustrated in Fig. 6.

### Operations In Locked State (For A Right Turn)

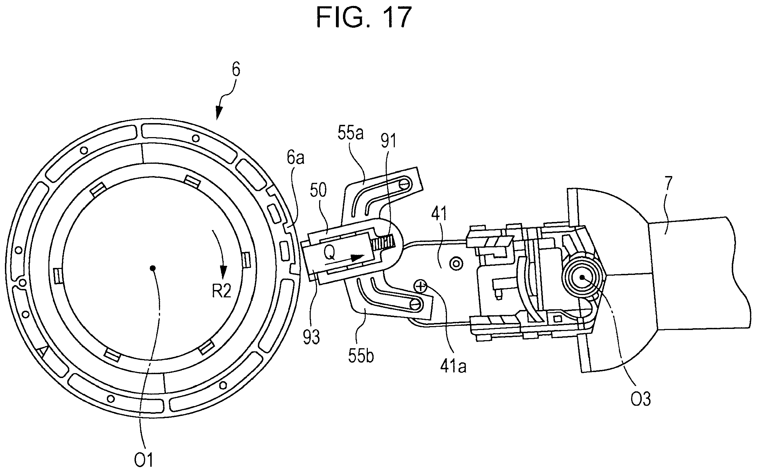

Description below with reference to, for example, Fig. 17 is dedicated to operations performed when the operating lever 7 is locked with, for example, a finger at the start of the operations in which the steering wheel having been rotated clockwise for a right turn is returned by being rotated counterclockwise as illustrated in Fig. 13.

As illustrated in Fig. 13, when the steering wheel having been rotated clockwise for the right turn is returned by being rotated counterclockwise, the cancel cam member 6 is rotated in the arrow R2 direction illustrated in Fig. 13. In this process, although the end portion of the cancel projection 6a presses the side surface of the moving body 93 in the arrow R2 direction, the holding body 3 is not rotated because the operating lever 7 is locked. Accordingly, the cancel lever 4 is not rotated, and a pressure of a certain degree or larger is applied from the cancel projection 6a to the side surface of the moving body 93.

This causes the elastic member 91 to be pressed and contracted and the moving body 93 to be moved in an arrow Q direction (a direction of the elastic member 91, a retracting direction from the rotational path of the cancel projection 6a) as illustrated in Fig. 17 against an elastic force of the elastic member 91 so as to be out of the rotational path of the cancel projection 6a. Thus, the cancel lever 4 is automatically returned to the neutral position illustrated in Fig. 6.

With this structure, even in the case where the operating lever 7 is locked when making a right turn, damage due to an overload produced between the cancel cam member 6 and the cancel lever 4 can be prevented.

### Operations In Locked State (For A Left Turn)

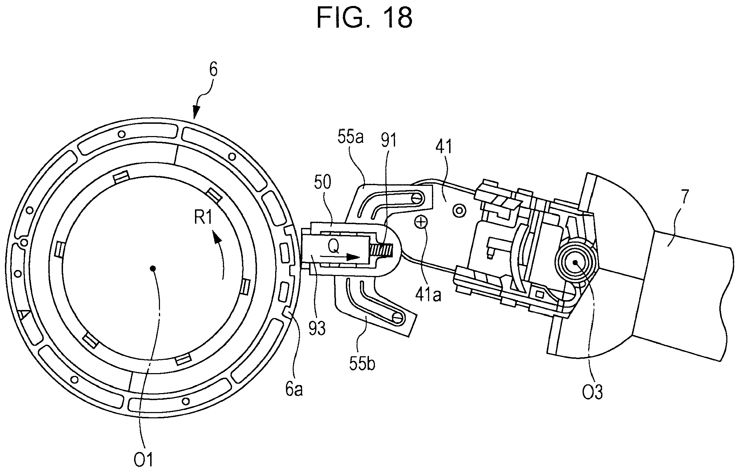

Description below with reference to, for example, Fig. 18 is dedicated to operations performed when the operating lever 7 is locked with, for example, a finger at the start of the operations in which the steering wheel having been rotated counterclockwise for a left turn is returned by being rotated clockwise as illustrated in Fig. 16.

As illustrated in Fig. 16, when the steering wheel having been rotated counterclockwise for the left turn is returned by being rotated clockwise, the cancel cam member 6 is rotated in the arrow R1 direction illustrated in Fig. 16. In this process, although the end portion of the cancel projection 6a presses the side surface of the moving body 93 in the arrow R1 direction, the holding body 3 is not rotated because the operating lever 7 is locked. Accordingly, the cancel lever 4 is not rotated, and a pressure of a certain degree or larger is applied from the cancel projection 6a to the side surface of the moving body 93.

This causes the elastic member 91 to be pressed and contracted and the moving body 93 to be moved in the arrow Q direction (the direction of the elastic member 91, the retracting direction from the rotational path of the cancel projection 6a) as illustrated in Fig. 18 against the elastic force of the elastic member 91 so as to be out of the rotational path of the cancel projection 6a. Thus, the cancel lever 4 is automatically returned to the neutral position illustrated in Fig. 6.

With this structure, even in the case where the operating lever 7 is locked when making a left turn or a right turn, damage due to an overload produced between the cancel cam member 6 and the cancel lever 4 can be prevented.

As has been described, the anti-cancel jam mechanism 85 is provided in the cancel lever 4 instead of in the holding body 3 in the input operating apparatus 1 as illustrated in, for example, Fig. 6. This can simplify the structure of the holding body 3 and reduce the size of the structure of the holding body 3. Furthermore, the above-described anti-cancel jam mechanism 85 is provided in the cancel lever 4 that is positioned near the housing 2 and outside the housing 2. Compared to the case where the anti-cancel jam mechanism 85 is provided in the holding body 3, this can increase ease of assembly and reduce the production cost.

As described above, the anti-cancel jam mechanism 85 is realized by holding the moving body 93 in the first engaging portion 50 with the elastic member 91 interposed therebetween. Accordingly, a unit for realizing the anti-cancel jam mechanism 85 can be incorporated in the cancel lever 4 in advance. This can increase ease of assembly and reduce the production cost.

Furthermore, in the input operating apparatus 1, the moving body 93 is fitted into the accommodating space 50b by using a snap-in mechanism. This can increase ease of assembly and reduce the production cost.

Also in the input operating apparatus 1, the cancel lever 4 is formed by connecting the first engaging portion 50 and the second engaging portion 55 to each other by the connecting portion 57 that extends in the second virtual rotational axis 02 direction. That is, the first engaging portion 50 and the second engaging portion 55 are provided at different positions in the second virtual rotational axis 02 direction, and a region where the first engaging portion 50 and the second engaging portion 55 are superposed on each other extends in the perpendicular direction to the second virtual rotational axis 02 direction. Thus, even when the distance between the cancel cam member 6 and the cancel lever 4 is reduced, the distance required for advancing and retracting the cancel lever 4 can be sufficiently ensured, and size reduction can be achieved. This allows the distance between the cancel cam member 6 and the operating lever 7 to be reduced.

The second engaging portion 55 is closer to the holding body 3 than the first engaging portion 50 in the cancel lever 4 of the input operating apparatus 1. Thus, the second engaging portion 55 can be disposed close to the holding body 3. This allows an engagement structure of the second engaging portion 55 and the holding body 3 to be realized with a simple and small-sized structure.

Also in the input operating apparatus 1, as illustrated in Figs. 3 and 5, the connecting portion 57 of the cancel lever 4 is guided by the elongated guide hole 35 formed in the lower casing 33 so as to be advanced toward and retracted from the rotational path of the cancel projection 6a of the cancel cam member 6. At this time, the connecting portion 57 is guided by the elongated guide hole 35 so as to allow the cancel lever 4 to be rotated about the connecting portion 57.

With the elongated guide hole 35 formed in the lower casing 33 as described above, a separate guide portion is not required. Thus, size reduction can be achieved.

Furthermore, with the input operating apparatus 1, the elongated guide hole 35 that guides the connecting portion 57 is provided in the lower casing 33 as described above. Thus, the first engaging portion 50 can be provided outside the lower casing 33 with a simple structure. Furthermore, since the first engaging portion 50 is provided outside the lower casing 33, the size of the housing 2 can be reduced.

Also in the input operating apparatus 1, as illustrated in Fig. 5, the first virtual rotational axis O1 exists at a position separated from the position of the first virtual line 35a which passes through the path through which the cancel lever 4 is advanced and retracted (in the longitudinal direction of the elongated guide hole 35).

Thus, even when the distance between the cancel cam member 6 and the cancel lever 4 is reduced, the distance required for advancing and retracting the cancel lever 4 can be sufficiently ensured, and size reduction can be achieved. This allows the distance between the cancel cam member 6 and the operating lever 7 to be reduced.

Also in the input operating apparatus 1, as illustrated in Fig. 6, the first engaging portion 50 of the cancel lever 4 is line symmetric about the second virtual line 50a which passes through the first virtual rotational axis O1 of the cancel cam member 6 and the second virtual rotational axis 02 of the cancel lever 4.

Accordingly, when the cancel operation is performed, the first engaging portion 50 can be brought into contact with the cancel projection 6a in the same manner in both clockwise and counterclockwise rotations. Thus, the cancel operation can be reliably performed in both the clockwise and counterclockwise rotations.

Also in the input operating apparatus 1, at the neutral position illustrated in Fig. 6, the drive portion 41a of the projecting surface portion 41 of the holding body 3, which is brought into contact with the first arm 55a and the second arm 55b of the second engaging portion 55 of the cancel lever 4 when the cancel operation is performed, is positioned on the second virtual line 50a. The second virtual line 50a is the path through which the first engaging portion 50 is advanced and retracted.

Accordingly, when the cancel operation is performed, the cancel lever 4 can drive the operating lever 7 through the holding body 3 in the same state in both the clockwise and counterclockwise rotations. Thus, the clockwise and counterclockwise cancel operations can be reliably performed.

Also in the input operating apparatus 1, as illustrated in Fig. 5, the third virtual rotational axis 03 of the holding body 3 is positioned on the first virtual line 35a extending in the longitudinal direction of the elongated guide hole 35 (moving direction of the cancel lever 4).

Accordingly, the second engaging portion 55 of the cancel lever 4 can reliably return the holding body 3 (operating lever 7) to the neutral position in the same state in both the clockwise and counterclockwise cancel operations.

The present invention is not limited to the above-described embodiment.

That is, those skilled in the art may make various changes in, various combinations of, various sub-combinations of, and various substitutions for the elements of the above-described embodiment within the technical scope of or within the scope of equivalents of the present invention.

In the example according to the above-described embodiment, the first engaging portion 50 and the second engaging portion 55 are, as illustrated in Fig. 7, provided at different positions along the second virtual rotational axis 02. However, the first engaging portion 50 and the second engaging portion 55 may be provided at the same position along the second virtual rotational axis 02.

Furthermore, in the example according to the above-described embodiment, the first virtual rotational axis O1 exists at a position separated from the position of the first virtual line 35a which passes through the path through which the cancel lever 4 is advanced and retracted. However, the first virtual rotational axis O1 may extends on the first virtual line 35a.

Furthermore, in the example according to the above-described embodiment, the input operating apparatus 1 exemplifies the input operating apparatus according to the present invention. However, the present invention can also be used to make any of other input operating apparatuses that include an operating lever, a holding body that supports a base of the operating lever such that the base is rotatable in one plane, a housing that supports the holding body such that the holding body is rotatable in another plane which intersects the one plane, and a cancel lever that is provided in the housing, movable as the holding body is rotated, rotatable, and can be advanced toward and retracted from a rotational path of a cancel projection provided on a steering shaft.

The present invention can be used to make an input operating apparatus that includes an operating lever.

## Claims

1. An input operating apparatus (1) comprising:
an operating lever (7);
a holding body (3) that holds a base (20) of the operating lever such that the base is rotatable in one plane (P1);
a support body (33) that supports the holding body such that the holding body is rotatable in another plane (P2) which intersects the one plane; and
a cancel lever (4) that is movable as the holding body is rotated, that is rotatable, and that is able to be advanced toward and retracted from a rotational path of a cancel projection (6a) which is rotated together with a steering shaft,
wherein the cancel lever includes an anti-cancel jam mechanism (85) that is advanced toward and retracted from the rotational path of the cancel projection and that is engageable with the cancel projection, that is engaged with the holding body, and that is moved in a direction retracting from the rotational path of the cancel projection when receiving a rotational force from the cancel projection while the rotation of the holding body is regulated by the operating lever.

2. The input operating apparatus according to Claim 1,
wherein the cancel lever includes
a cancel lever main body (50, 55, 57) and
the anti-cancel jam mechanism,
wherein the anti-cancel jam mechanism includes
an elastic member (91) and
a moving body (93) provided in the cancel lever main body with the elastic member interposed therebetween, and
wherein, when the rotation of the holding body is regulated by the operating lever and the rotational force is applied from the cancel projection to the cancel lever, the moving body is moved in the direction retracting from the rotational path of the cancel projection against an elastic force of the elastic member.

3. The input operating apparatus according to Claim 1 or 2,
wherein, in a neutral state in which the cancel projection is positioned in a movement path of the moving body, the moving body faces the cancel projection with a gap therebetween and is positioned out of the rotational path of the cancel projection, wherein, in a non-neutral state in which the cancel projection is not positioned in the movement path of the moving body, the moving body is positioned in the rotational path of the cancel projection, and
wherein, when the non-neutral state changes to the neutral state, the moving body is pressed by the cancel projection, thereby the moving body rotates the cancel lever, and the rotation of the cancel lever causes the holding body to be pressed so as to return the holding body to the neutral state.

4. The input operating apparatus according to any one of Claims 1 to 3,
wherein the cancel lever includes
a first engaging portion (50) that is provided outside the support body, that is advanced toward and retracted from the rotational path of the cancel projection, and that is engageable with the cancel projection, and
a second engaging portion (55) that is provided inside the support body and that is engaged with the holding body,
wherein the anti-cancel jam mechanism is provided in the first engaging portion.

5. The input operating apparatus according to any one of Claims 2 to 4,
wherein the cancel lever has an accommodating space (50b) in which the moving body is slidably held, and
wherein the moving body is fitted into the accommodating space by using a snap-in mechanism.

6. The input operating apparatus according to Claim 1,
wherein the operating lever is rotatable from a neutral position to at least a left-turn indication rotational position and a right-turn indication rotational position, and
wherein the operating lever includes
a first engaging portion (50) that projects toward the rotational path and that is advanced toward and retracted from the rotational path, and
a second engaging portion (55) that projects in an opposite direction to a direction in which the first engaging portion projects and, during the retraction from the rotational path of the cancel projection, that is rotated so as to be brought into contact with the holding body, thereby rotating the holding body so as to cause the operating lever to be automatically returned from the left-turn indication rotational position or the right-turn indication rotational position to the neutral position.
